# FASCICULE DE BREVET EUROPEEN

(11) **EP 2 104 277 B1**
(45) Date de publication et mention de la délivrance du brevet: **12.05.2010**
(21) Numéro de dépôt: 08300137.0
(22) Date de dépôt: 10.03.2008
(51) Int. Cl.: H04L 12/413, H04L 12/26, H04L 12/24, H04L 12/40, H04L 12/46

(54) **Détection de pannes et isolation d'un réseau CAN highspeed AVAL**
Störungserkennung und Isolierung eines nachgeschalteten Highspeed-CAN-Netzes
Detection of breakdowns and isolation of a high-speed downstream CAN network

(43) Date de publication de la demande: 23.09.2009
(73) Titulaire: Delphi Technologies, Inc., Troy, MI 48007 (US)
(72) Inventeur: Djellouli, Abdelkader, 93190 Livry-Gargan (FR)
(74) Mandataire: Robert, Vincent

(56) Documents cités:
- WO-A-2007/005629
- DE-A1- 10 043 086
- DE-A1- 10 121 587
- FR-A- 2 861 866
- US-A- 5 809 077
- US-A1- 2004 111 188
- JOSE RUFINO ET AL: "Enforcing Dependability and Timeliness in Controller Area Networks" IEEE INDUSTRIAL ELECTRONICS, IECON 2006 - 32ND ANNUAL CONFERENCE ON, IEEE, PISCATAWAY, NJ, USA, 1 novembre 2006 (2006-11-01), pages 3755-3760, XP031077692 ISBN: 978-1-4244-0135-2

## Description

Le domaine de la présente invention est celui des équipements automobiles et en particulier des réseaux de transmission de données pour véhicules, du type CAN High Speed (Controller Area Network - High Speed) qui utilisent deux lignes (CAN_High et CAN_Low) pour la transmission des données.

La technologie des réseaux de communications par bus pour les véhicules automobiles s'est généralisée au cours des dernières années du fait de l'implantation de nombreux équipements nouveaux et du souhait de réduire le volume des câblages nécessaires à la transmission des informations associées. Ces systèmes sont devenus très complexes, ce qui entraîne des difficultés pour leur diagnostic et peut aboutir à des surcoûts de maintenance si des erreurs conduisent à remplacer une pièce non défectueuse.

Une des difficultés rencontrées avec les réseaux CAN High Speed est qu'ils ne sont pas tolérants aux défauts et qu'ils ne permettent pas une bonne gestion de ces défauts. En particulier, en cas de défaut électrique, l'ensemble du réseau devient non fonctionnel, ce qui occasionne l'impossibilité pour les calculateurs présents sur le réseau, bien qu'encore fonctionnels, de pouvoir communiquer entre eux.

Dans les véhicules modernes les réseaux CAN High Speed sont très souvent au nombre de deux, l'un étant destiné à faire circuler les informations destinées aux organes moteur ou aux freins (réseau dit amont) qui requiert un haut niveau de fiabilité et l'autre aux organes situés sur l'avant du véhicule (phares, ...), qui peut accepter un niveau de fiabilité moindre. Ce dernier réseau, dit réseau aval, a pour inconvénient d'être vulnérable aux chocs car positionné en grande partie dans le pare-choc avant. Il s'ensuit aujourd'hui qu'une panne constatée sur le réseau aval entraîne simultanément la mise en panne du réseau amont.

Il existe plusieurs types de défauts électriques que l'on est susceptibles de rencontrer sur les réseaux CAN High Speed, que l'on peut regrouper en deux groupes :
- des défauts dits de type 1, qui sont du type court-circuit et qui sont détectables par l'interface de ligne (ou ERL) du réseau. Ils regroupent les défauts pour lesquels la communication sur le réseau est stoppée (court-circuit entre la ligne CAN_High et la masse et court-circuit entre la ligne CAN_Low et la tension batterie ou la tension d'alimentation Vcc) et les défauts pour lesquels la communication sur le réseau reste possible (court-circuit entre la ligne CAN_High et la tension batterie ou la tension d'alimentation Vcc et court-circuit entre la ligne CAN_Low et la masse). Du fait qu'ils sont détectables par l'interface de ligne ils se traduisent par la mise à zéro d'un bit d'état (bit Nerr), dont la valeur est accessible par le microcontrôleur de gestion du réseau.
- des défauts dits de type 2, qui regroupent les circuits ouverts sur l'une des lignes CAN_High ou CAN_Low, et le court-circuit mutuel entre les lignes CAN_High et CAN_Low. Ces derniers défauts stoppent toute communication sur le réseau et ne sont pas détectés par l'interface de ligne.

Plusieurs stratégies de détection de panne sur le réseau CAN High Speed aval ont été imaginées, associées à une mise hors circuit du réseau CAN High Speed aval, mais elles ne permettent pas de traiter tous les cas de panne, certains cas comme ceux du type circuit ouvert ou court-circuit mutuel entre les deux lignes CAN_High et CAN_Low restant indétectés.

Les documents WO 2007/005629, US 2004/111188, FR 2 861 866 et DE 101 21 587 décrivent des procédés de détection de pannes sur un réseau CAN.

La présente invention a pour but de remédier à ces inconvénients en proposant une stratégie de détection de panne sur un réseau, qui permette de couvrir tous les cas de pannes électriques possibles sur ce réseau, associée à un moyen d'isoler le réseau du calculateur défaillant du réseau CAN High Speed non défaillant.

A cet effet, l'invention a pour objet un dispositif de détection de pannes sur un réseau CAN High Speed aval en vue de son isolation vis-à-vis d'un réseau CAN High Speed amont considéré comme prioritaire, comprenant entre autres d'une part un microcontrôleur de gestion des échanges entre les deux réseaux, et d'autre part un contrôleur CAN et une interface de ligne destinée à relier le microcontrôleur au réseau Aval caractérisé en ce que le microcontrôleur contient un module apte à générer des émissions répétitives de trames sur le réseau CAN High Speed aval et à recueillir les accusés de réception de ces trames par les équipements reliés audit réseau CAN High Speed aval afin, dans le cas d'une absence d'accusé de réception d'un desdits équipements, de mettre le réseau CAN High Speed aval en isolation.

L'émission de trames sur le réseau CAN High Speed aval et le recueil des accusés de réception permettent de détecter des pannes de type 2, qui ne sont pas décelables par l'interface de ligne.

Selon l'invention ledit module comprend un compteur (compteur Non_Ack) des non réceptions d'une trame, qu'il incrémente, pendant un temps de filtrage donné (T filtrage Non_Ack), d'une quantité prédéfinie à chaque non réponse et dont il compare la valeur à une valeur seuil (Seuil Non_Ack) à la suite de chaque interrogation effectuée par l'émission d'une trame, pour décider de l'isolation ou non du réseau CAN High Speed aval.

Cette stratégie de détection permet de s'affranchir des pannes fugitives pour des défauts de type 2 et de ne mettre le réseau CAN High Speed aval en isolation que pour une panne franche.

Dans un mode particulier de réalisation les trames émises ne sont pas avortées pendant toute la durée du temps de filtrage (T filtrage Non_Ack).

Dans un autre mode de réalisation chacune des trames émises est avortée avant l'émission de la trame suivante.

Ceci permet de ne pas surcharger le réseau en limitant la durée de circulation de ces trames d'évaluation de pannes.

Avantageusement ledit module génère, pendant un temps de filtrage donné (T filtrage Nerr), un compteur (compteur Nerr) des détections d'un défaut par l'interface de ligne, qu'il incrémente d'une quantité prédéfinie et dont il compare la valeur à une valeur seuil (Seuil Nerr) lors de chaque interrogation de l'état du bit Nerr du réseau CAN High Speed aval, pour décider de l'isolation ou non du réseau CAN High Speed aval.

Cette stratégie de détection permet de s'affranchir des pannes fugitives pour des défauts de type 1.

Dans un mode particulier de réalisation l'interrogation du bit Nerr s'effectue en séquence à des intervalles de temps prédéfinis.

Dans un autre mode de réalisation l'interrogation du bit Nerr s'effectue lors de chaque réception d'un message par le réseau CAN High Speed aval.

L'invention a également pour objet un procédé de détection de pannes sur un réseau CAN High Speed aval en vue de son isolation vis-à-vis d'un réseau CAN High Speed amont considéré comme prioritaire, les deux réseaux étant reliés par une passerelle comprenant entre autres d'une part un microcontrôleur de gestion des échanges, et d'autre part une interface de ligne et un contrôleur CAN destinés à relier le microcontrôleur au réseau CAN High Speed aval caractérisé en ce qu'il comprend une étape d'émissions répétitives par le microcontrôleur de trames sur le réseau CAN High Speed aval, une étape de recueil des accusés de réception de ces trames par les équipements reliés audit réseau CAN High Speed aval pour chacune des trames émises et, dans le cas d'une absence d'accusé de réception d'un desdits équipements, une étape de mise en isolation du réseau CAN High Speed aval.

Selon l'invention le procédé de détection comprend en outre une étape de création d'un compteur (compteur Non_Ack) des non réceptions d'une trame et d'incrémentation dudit compteur d'une quantité prédéfinie à chaque non réponse faisant suite à l'émission d'une trame, et une étape de comparaison de la valeur dudit compteur à une valeur seuil (Seuil Non_Ack) pour décider de l'isolation ou non du réseau CAN High Speed aval, suivies, le cas échéant, d'une étape de remise à zéro du compteur s'il n'a pas atteint ledit seuil au bout d'un temps de filtrage donné (T filtrage Non_Ack).

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue schématique d'une passerelle entre deux réseaux CAN High Speed, avec un boîtier d'isolation réseau (BIR) selon un mode de réalisation de l'invention, implanté dans le microcontrôleur de gestion des échanges entre les deux réseaux;
- la figure 2 est un diagramme donnant l'évolution d'un compteur de défauts "Nerr" en cas de pannes fugitives du type court-circuit sur une des lignes et le filtrage appliqué en conséquence par le BIR sur le réseau CAN High Speed aval;
- la figure 3 est un diagramme donnant l'évolution d'un compteur de défauts "Nerr" dans le cas d'une panne franche du type court-circuit sur une des lignes et le filtrage appliqué en conséquence par le BIR sur le réseau CAN High Speed aval;
- la figure 4 est un chronogramme décrivant la stratégie de détection d'une panne, du type circuit ouvert ou court-circuit entre les lignes sur le réseau CAN High Speed aval, et le comportement associé du BIR;
- la figure 5 est un diagramme donnant l'évolution d'un compteur de défauts "Non_Ack" en cas de pannes fugitives du type circuit ouvert sur une des lignes et le filtrage appliqué en conséquence par le BIR sur le réseau CAN High Speed aval;
- la figure 6 est un diagramme donnant l'évolution d'un compteur de défauts "Non_Ack" en cas d'une panne franche du type circuit ouvert sur une des lignes et le filtrage appliqué en conséquence par le BIR sur le réseau CAN High Speed aval;

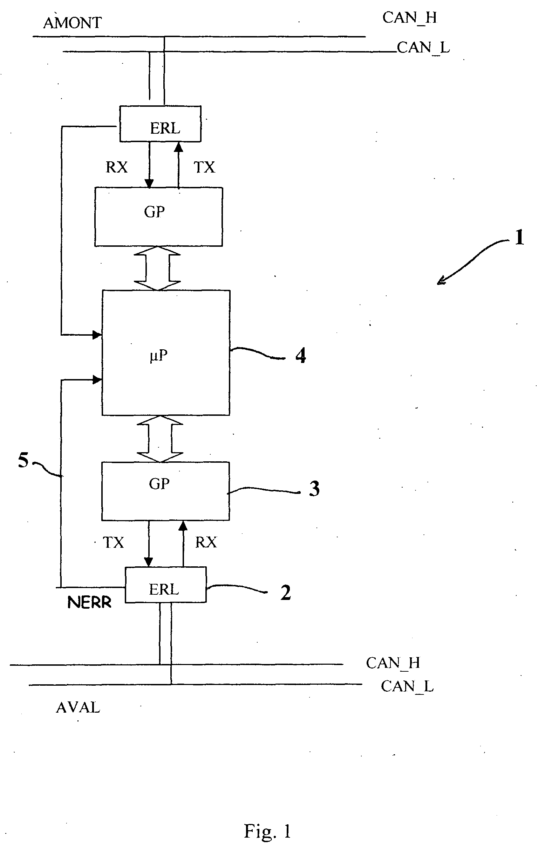

En se référant à la figure 1, on voit une passerelle 1 entre un premier réseau CAN High Speed "amont" reliant entre eux un certain nombre d'équipements, et un second réseau CAN High Speed "aval" reliant entre eux une seconde série d'équipements. Cette passerelle 1 comprend pour chaque réseau une interface de ligne 2 et un contrôleur CAN (ou gestionnaire de protocole GP) 3, ainsi qu'un microcontrôleur 4 de gestion des échanges entre les deux réseaux. Cette passerelle comprend également pour chaque réseau une liaison 5 sur laquelle circulent les informations d'erreur qui sont détectées par l'interface de ligne 2 et qui sont transmises, par la mise à zéro d'un bit Nerr, au microcontrôleur 4.

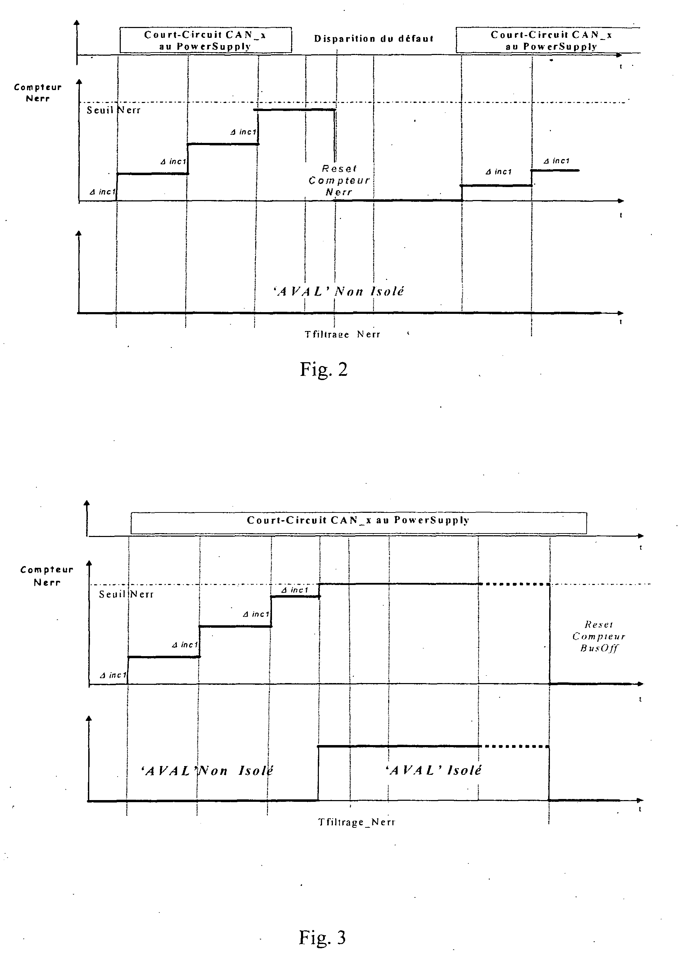

En se référant aux figures 2 et 3, on voit, sur le réseau CAN High Speed aval, l'évolution du compteur des défauts de type 1 reçus par le microcontrôleur 4 après leur détection par l'interface de ligne 2, dans le cas d'une panne fugitive (figure 2) ou franche (figure 3). Sur ces figures est représenté, à titre d'exemple, le cas d'un court-circuit entre une des lignes CAN_High ou CAN_Low et l'alimentation. On voit également sur les figures l'action effectuée par le microcontrôleur 4 équipé d'un module de calcul BIR selon un mode de réalisation de l'invention, et l'effet que celle-ci a sur la mise hors circuit ou non du réseau CAN High Speed aval. Le module BIR est typiquement réalisé sous une forme logicielle et est constitué par une suite d'instructions intégrées dans le microcontrôleur 4.

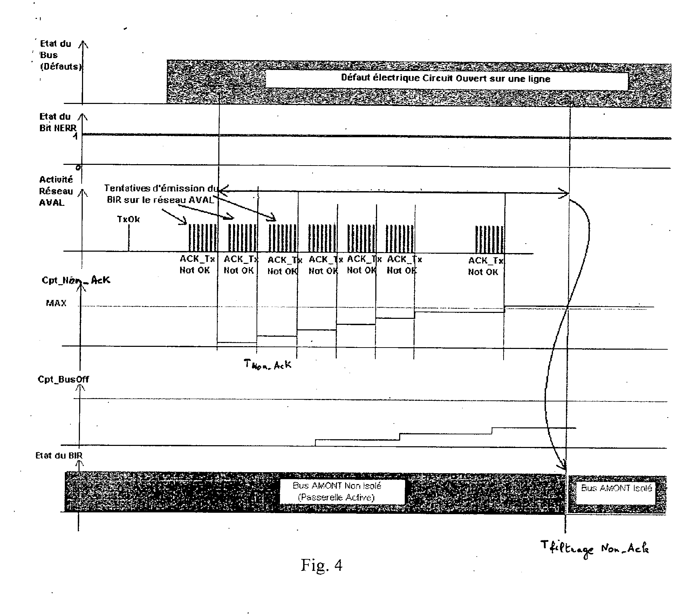

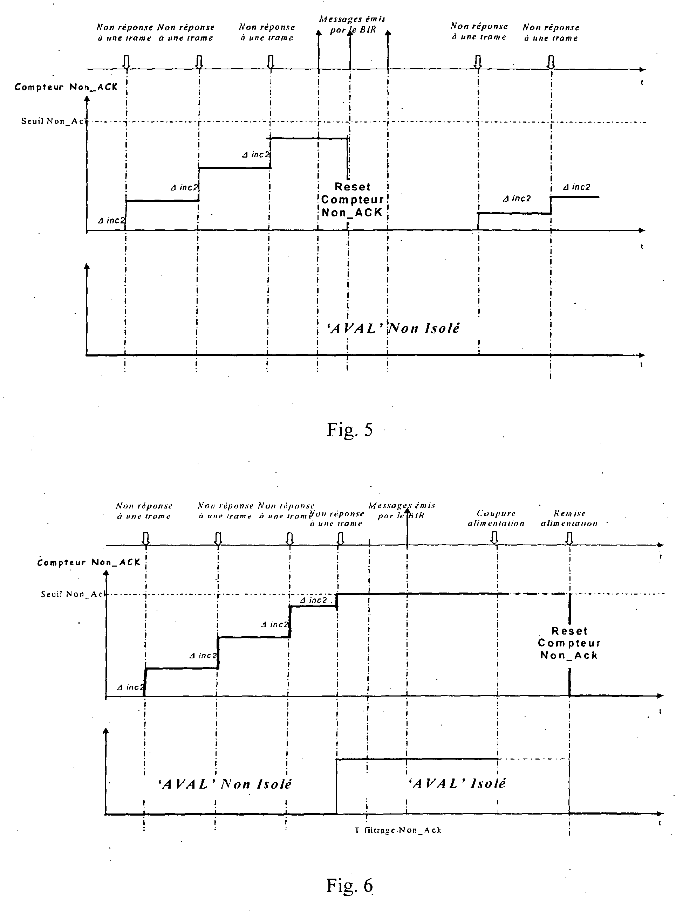

En se référant aux figures 4 à 6, on voit le déroulement du processus de détection d'un défaut électrique du type 2 (circuit ouvert sur une ligne ou court-circuit mutuel entre les deux lignes) par l'envoi d'une série de trames sur le réseau CAN High Speed aval. Pendant tout le temps présenté sur ces figures le bit_Nerr reste égal à 1, le défaut en question n'étant pas détecté par l'interface de ligne 2. Sur les figures 5 et 6 on voit l'évolution du compteur des défauts de type 2 mis en évidence par l'absence d'une réponse à l'émission d'une trame par le microcontrôleur 4, dans le cas d'une panne fugitive (figure 5) ou franche (figure 6). On voit également l'action effectuée par le microcontrôleur 4 équipé d'un module de calcul BIR selon un mode de réalisation de l'invention, et l'effet que celle-ci a sur la mise hors circuit ou non du réseau CAN High Speed aval.

On va maintenant décrire le fonctionnement du module BIR lors de la survenance d'une panne de type 1 ou de type 2 sur le réseau CAN High Speed aval.

La connaissance d'une panne de type 1 a pour origine la détection effectuée par l'intermédiaire de l'interface de ligne 2, qui se fait par la mesure du niveau de charge du courant circulant sur le bus. Cette interface de ligne transmet, par la liaison 5, l'information de panne au microcontrôleur 4 en mettant la valeur du bit Nerr à zéro.

Dans le but d'éviter la mise hors circuit du réseau CAN High Speed aval lors d'une simple panne fugitive, le module BIR lit de façon répétitive, la valeur du bit Nerr à des intervalles de temps prédéfinis (typiquement de l'ordre de 10 ms) et s'il constate un défaut (bit Nerr à zéro) il crée un compteur, dit compteur Nerr, et lui donne une première valeur Δinc1. Le compteur croit alors d'une valeur Δinc1 à chaque interrogation si la panne persiste, jusqu'à atteindre éventuellement une valeur seuil, dite Seuil Nerr. Ces interrogations se poursuivent pendant un temps prédéfini T filtrage_Nerr au bout duquel, si le compteur Nerr n'a pas atteint le seuil Nerr, ce dernier est remis à zéro. Le temps de filtrage Nerr est choisi typiquement de l'ordre de 150ms, sans que cette valeur soit impérative.

Lorsque le seuil Nerr n'est pas atteint au cours du temps T filtrage_Nerr (cf. fig. 2), c'est-à-dire que les défauts constatés, s'il y en a, ne sont que fugitifs, le réseau CAN High Speed aval n'est pas mis en isolation et continue à transmettre et à recevoir des informations à travers la passerelle 1, en direction du réseau amont. Dans le cas contraire (cf. fig. 3) le module considère qu'il a affaire à une panne franche et il isole le réseau CAN High Speed aval dès que le nombre de détections de défauts associé à la valeur du seuil Nerr est atteint.

Dans le cas de pannes uniquement fugitives, après la remise à zéro du compteur Nerr, les interrogations du bit Nerr reprennent à intervalles réguliers et la création d'un nouveau compteur Nerr est relancée si une panne est à nouveau détectée.

Dans le cas d'une panne franche le contrôleur CAN détecte lui aussi le défaut et déclenche au bout d'un certain temps, par l'intermédiaire de l'incrémentation d'un compteur BusOff, la mise hors service du bus et l'arrêt des émissions et des réceptions de messages. Ce compteur BusOff est classiquement remis lui aussi régulièrement à zéro, afin de pouvoir tester si la panne a disparu, en relançant le processus d'évaluation de défauts.

De façon alternative la lecture de l'état du bit Nerr peut s'effectuer non pas à des intervalles réguliers comme indiqué ci-dessus mais lors de chaque réception d'un message par le réseau CAN High Speed aval. Ceci donne une plus grande validité à la lecture de la valeur du bit Nerr, en effectuant cette lecture au moment précis où elle est utile.

Les pannes du type 2 posent le problème particulier de leur détection puisqu'elles ne sont pas visibles par l'interface de ligne 2. Pour y remédier le module BIR prévoit le lancement périodique de trames sur le réseau CAN High Speed aval et l'analyse des réponses faites par les divers équipements branchés sur le réseau.

La figure 4 montre, à des intervalles réguliers (typiquement de l'ordre de 7 ms), des tentatives successives d'émission d'une trame sur le réseau CAN High Speed aval par le module BIR, pour lesquelles il attend une réponse ("Acknowledgment"). Si les équipements sont opérationnels ils répondent tous par un bit, dit récessif, de bon fonctionnement. Si un seul est non fonctionnel il ne renvoie pas d'information de réception de la trame, ce qui se traduit au niveau du réseau, par la lecture par le module BIR d'un bit, dit dominant, qui prend le pas sur les bits récessifs des autres équipements. L'information reçue par le module BIR est alors celle d'un défaut de réponse.

Toujours pour prendre en compte le cas des pannes fugitives et ne pas pénaliser inutilement le réseau, le module BIR crée pour les défauts de type 2, de façon similaire à la stratégie d'élimination des défauts fugitifs décrite pour les défauts de type 1, un compteur de non-réponse (Compteur Non_Ack) qu'il incrémente d'une valeur Δainc2 à chaque retour d'un bit dominant qui fait suite à l'émission d'une trame. A ce compteur est associé un seuil Non_Ack et un temps de filtrage T filtrage Non_Ack (typiquement de l'ordre de 150 ms) au bout duquel le compteur Non_Ack est remis à zéro si le seuil Non_Ack n'est pas atteint. Si le seuil est atteint avant le temps T filtrage Non_Ack la panne est décrétée être une panne franche et le module BIR isole le réseau CAN High Speed aval du réseau Can High Speed amont.

La mise en isolement du réseau CAN High Speed aval peut être effectuée dès l'atteinte du seuil Non_Ack par le compteur, ou d'une façon plus simple (comme cela est représenté sur la figure 4) par la lecture de la valeur du compteur Non_Ack au bout du temps de filtrage et la comparaison de celle-ci avec la valeur du seuil.

De façon alternative, et comme cela est également représenté sur la figure 4, l'émission de chaque trame peut ne pas être poursuivie jusqu'au temps de filtrage T filtrage Non_Ack mais être avortée au bout d'un temps donné T Non_Ack (typiquement de l'ordre de 4 à 7 ms), avant l'émission de la trame suivante. Cette procédure présente de l'intérêt lorsqu'il convient de réduire le volume d'informations circulant sur le bus.

De manière synthétique le fonctionnement du module BIR peut être représentée par le tableau suivant, où l'on voit que la stratégie de détection fonctionne pour toutes les pannes électriques, qu'il s'agisse d'une panne de type 1 ou de type 2 :

| **Cas d'une simple panne sur le réseau AVAL** | | | | **Action du module BIR** |
|---|---|---|---|---|
| **Sur CAN_High** | **Sur CAN_Low** | **Détectable par l'interface de ligne ?** | **Détectable par le micro contrôleur ?** | |
| OK | OK | | | **Aucune action** |
| OK | **CC au +VBat** | OUI | OUI | **Isolation** |
| OK | **CC à la masse** | OUI | NON | **Isolation** |
| OK | CO | NON | OUI | **Isolation** |
| **CC au +VBat** | OK | OUI | NON | **Isolation** |
| **CC à la masse** | OK | OUI | OUI | **Isolation** |
| **CO** | OK | NON | OUI | **Isolation** |
| **CC CAN L** | **CC CAN H** | NON | OUI | **Isolation** |

| | | | | |
|---|---|---|---|---|
| avec la signification des abréviations suivante : **+VBat** : tension batterie **CC** : court-circuit **CO** : circuit ouvert **CC CYAN L** : court-circuit au CAN_Low **CC CAN H** : court-circuit au CAN_High | | | | |

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de détection de pannes sur un réseau CAN High Speed aval en vue de son isolation vis-à-vis d'un réseau CAN High Speed amont considéré comme prioritaire, comprenant entre autres d'une part un microcontrôleur (4) de gestion des échanges entre les deux réseaux, et d'autre part un contrôleur CAN (3) et une interface de ligne (2) destinée à relier le microcontrôleur (4) au réseau CAN High Speed aval, le dispositif étant **caractérisé en ce que**
le microcontrôleur (4) contient un module apte à générer des émissions répétitives de trames sur le réseau CAN High Speed aval et à recueillir les accusés de réception de ces trames par les équipements reliés audit réseau CAN High Speed aval afin, dans le cas d'une absence d'accusé de réception d'un desdits équipements, de mettre le réseau CAN High Speed aval en isolation,
ledit module comprend un compteur (compteur Non_Ack) des non réceptions d'une trame, et ledit module est apte à incrémenter ledit compteur, pendant un temps de filtrage donné (T filtrage Non_Ack), d'une quantité prédéfinie à chaque non réponse et à en comparer la valeur à une valeur seuil (Seuil Non_Ack) à la suite de chaque interrogation effectuée par l'émission d'une trame, pour décider de l'isolation ou non du réseau CAN High Speed aval.

2. Dispositif de détection de pannes selon la revendication 1 dans lequel les trames émises ne sont pas avortées pendant toute la durée du temps de filtrage (T filtrage Non_Ack).

3. Dispositif de détection de pannes selon la revendication 1 dans lequel chacune des trames émises est avortée avant l'émission de la trame suivante.

4. Dispositif de détection de pannes selon l'une des revendications 1 à 3 dans lequel ledit module est apte à générer, pendant un temps de filtrage donné (T filtrage Nerr), un compteur (compteur Nerr) des détections d'un défaut par l'interface de ligne (2), qu'il incrémente d'une quantité prédéfinie et dont il compare la valeur à une valeur seuil (Seuil Nerr) lors de chaque interrogation de l'état d'une information de panne du réseau CAN High Speed aval, cette information étant codée sur un bit, appelé bit Nerr, la valeur 0 de ce bit indiquant la détection par l'interface de ligne d'un défaut par la mesure du niveau de charge du courant circulant sur le bus réseau CAN High Speed aval et la valeur 1 de ce bit indiquant l'absence d'une telle détection par l'interface de ligne, pour décider de l'isolation ou non du réseau CAN High Speed aval.

5. Dispositif de détection de pannes selon la revendication 4 dans lequel l'interrogation du bit Nerr s'effectue en séquence à des intervalles de temps prédéfinis.

6. Dispositif de détection de pannes selon la revendication 4 dans lequel l'interrogation du bit Nerr s'effectue lors de chaque réception d'un message par le réseau CAN High Speed aval.

7. Procédé de détection de pannes sur un réseau CAN High Speed aval en vue de son isolation vis-à-vis d'un réseau CAN High Speed amont considéré comme prioritaire, les deux réseaux étant reliés par une passerelle (1) comprenant entre autres d'une part un microcontrôleur (4) de gestion des échanges, et d'autre part une interface de ligne (2) et un contrôleur CAN (3) destinés à relier le microcontrôleur (4) au réseau CAN High Speed aval ledit procédé étant **caractérisé en ce qu'**il comprend une étape d'émissions répétitives par le microcontrôleur (4) de trames sur le réseau CAN High Speed aval, une étape de recueil des accusés de réception de ces trames par les équipements reliés audit réseau aval pour chacune des trames émises et, dans le cas d'une absence d'accusé de réception d'un desdits équipements, une étape de mise en isolation du réseau CAN High Speed aval,
et **en ce que** le procédé comprend en outre une étape de création d'un compteur (compteur Non_Ack) des non réceptions d'une trame et d'incrémentation dudit compteur d'une quantité prédéfinie à chaque non réponse faisant suite à l'émission d'une trame, et une étape de comparaison de la valeur dudit compteur à une valeur seuil (Seuil Non_Ack) pour décider de l'isolation ou non du réseau CAN High Speed aval, suivies, le cas échéant, d'une étape de remise à zéro du compteur s'il n'a pas atteint ledit seuil au bout d'un temps de filtrage donné (T filtrage Non_Ack).

## Claims

1. Device for detection of malfunctions on a downstream CAN High Speed network in order to isolate it from an upstream CAN High Speed network considered as having priority, comprising inter alia on the one hand a microcontroller (4) for managing exchanges between the two networks and on the other a CAN controller (3) and a line interface (2) intended to connect the microcontroller (4) to the downstream CAN High Speed network,
the device being **characterised by** the fact that
the microcontroller (4) contains a unit able to generate repetitive transmissions of frames over the downstream CAN High Speed network and to collect notifications of receipt of these frames by the pieces of equipment connected to the said downstream CAN High Speed network in order, in case of absence of notification of receipt from one of the said pieces of equipment, to isolate the downstream CAN High Speed network,
the said unit comprises a counter (Non_Ack counter) of the non-receipts of a frame, and
the said unit is able to increment the said counter, during a given filtering time (Non_Ack filtering T), by a predefined quantity at each non-response to compare its value with a threshold value (Non_Ack Threshold) following each interrogation performed by transmission of a frame, to decide on isolation or otherwise of the downstream CAN High Speed network.

2. Device for detection of malfunctions as described in claim 1, in which the transmitted frames are not aborted throughout the whole duration of the filtering time (Non_Ack filtering T).

3. Device for detection of malfunctions as described in claim 1, in which each of the transmitted frames is aborted before transmission of the next frame.

4. Device for detection of malfunctions as described in one of claims 1 to 3, in which the said unit is able to generate, during a given filtering time (Nerr filtering T), a counter (Nerr counter) of the detections of an error by the line interface (2), which it increments by a predefined quantity and the value of which it compares with a threshold value (Nerr Threshold) at each interrogation of the state of a malfunction datum of the downstream CAN High Speed network, this datum being coded on a bit, termed Nerr bit, the 0 value of this bit indicating detection of an error by the line interface by measuring the charge level of the current circulating on the downstream CAN High Speed network bus and the 1 value of this bit indicating the absence of such a detection by the line interface, to decide on the isolation or otherwise of the downstream CAN High Speed network.

5. Device for detection of malfunctions as described in claim 4, in which the interrogation of the Nerr bit is effected sequentially at predetermined time intervals.

6. Device for detection of malfunctions as described in claim 4, in which the interrogation of the Nerr bit is effected at each receipt of a message by the downstream CAN High Speed network.

7. Process for detection of malfunctions in a downstream CAN High Speed network in order to isolate it from an upstream CAN High Speed network considered as having priority, the two networks being connected by a bridge (1) comprising inter alia on the one hand a microcontroller (4) for managing the exchanges and on the other a line interface (2) and a CAN controller (3) intended to connect the microcontroller (4) to the downstream CAN High Speed network,
the said process being **characterised by** the fact
that it comprises a step of repetitive transmissions by the microcontroller (4) of frames over the downstream CAN High Speed network, a step of collecting notifications of receipt of these frames by the pieces of equipment connected to the said downstream network for each of the transmitted frames and, in the case of absence of notification of receipt from one of the said pieces of equipment, a step of isolating the downstream CAN High Speed network,
and by the fact that the process also comprises a step of creation of a counter (Non_Ack counter) of the non-receipts of a frame and of incrementation of the said counter by a predefined quantity at each non-receipt following the transmission of a frame, and a step of comparison of the value of the said counter with a threshold value (Non_Ack Threshold) to decide on the isolation or otherwise of the downstream CAN High Speed network, followed, where necessary, by a step of re-zeroing the counter if it has not attained the said threshold at the end of a given filtering time (Non_Ack filtering T).

## Patentansprüche

1. Vorrichtung zur Erfassung von Störungen auf einem nachgeschalteten Highspeed-CAN-Netz zum Zweck seiner Isolierung von einem als vorrangig betrachteten vorgeschalteten High-speed-CAN-Netz, umfassend unter anderem einerseits ein Mikrosteuergerät (4) zur Verwaltung der Austausche zwischen den beiden Netzen und andererseits einen CAN-Controller (3) und eine Leitungsschnittstelle (2), die dazu bestimmt ist, das Mikrosteuergerät (4) mit dem nachgeschalteten High-speed-CAN-Netz zu verbinden,
wobei die Vorrichtung **dadurch gekennzeichnet ist, dass**
das Mikrosteuergerät (4) ein Modul enthält, das in der Lage ist, wiederholte Sendungen von Frames zu dem nachgeschalteten Highspeed-CAN-Netz zu erzeugen und die Bestätigungen des Empfangs dieser Frames durch die mit dem nachgeschalteten Highspeed-CAN-Netz verbundenen Einrichtungen zu empfangen, um im Fall des Fehlens einer Empfangsbestätigung einer der Einrichtungen das nachgeschaltete Highspeed-CAN-Netz zu isolieren,
dieses Modul einen Zähler (Non_Ack-Zähler) der Nichtempfänge eines Frames umfasst und
dieses Modul in der Lage ist, den Zähler während einer gegebenen Filterzeit (Non_Ack-T-Filterung) bei jeder Nichtantwort um eine vordefinierte Menge zu inkrementieren und den Wert davon nach jeder durch die Sendung eines Frames vorgenommenen Abfrage mit einem Schwellenwert (Non_Ack-Schwelle) zu vergleichen, um über die Isolierung oder Nichtisolierung des nachgeschalteten Higspeed-CAN-Netzes zu entscheiden.

2. Vorrichtung zur Erfassung von Störungen nach Anspruch 1, bei der die gesendeten Frames während der gesamten Dauer der Filterzeit (Non_Ack-T-Filterung) nicht abgebrochen wurden.

3. Vorrichtung zur Erfassung von Störungen nach Anspruch 1, bei der jeder der gesendeten Frames vor der Sendung des folgenden Frames abgebrochen wird.

4. Vorrichtung zur Erfassung von Störungen nach einem der Ansprüche 1 bis 3, bei der das Modul in der Lage ist, während einer gegebenen Filterzeit (Nerr-T-Filterung) einen Zähler (Nerr-Zähler) der Erfassungen eines Fehlers durch die Leitungsschnittstelle (2) zu erzeugen, den es um eine vordefinierte Menge inkrementiert und dessen Wert es bei jeder Abfrage des Zustands einer Störungsinformation des nachgeschalteten Highspeed-CAN-Netzes mit einem Schwellenwert (Nerr-Schwelle) vergleicht, wobei diese Information auf einem Bit, Nerr-Bit genannt, codiert ist, wobei der Wert 0 dieses Bits die Erfassung eines Fehlers durch die Leitungsschnittstelle durch die Messung des Ladungsniveaus des auf dem nachgeschalteten Highspeed-CAN-Netz-Bus fließenden Stroms angibt und der Wert 1 dieses Bits das Fehlen einer solchen Erfassung durch die Leitungsschnittstelle angibt, um über die Isolierung oder Nichtisolierung des nachgeschalteten Highspeed-CAN-Netzes zu entscheiden.

5. Vorrichtung zur Erfassung von Störungen nach Anspruch 4, bei der die Abfrage des Nerr-Bits in Folge in vordefinierten Zeitintervallen stattfindet.

6. Vorrichtung zur Erfassung von Störungen nach Anspruch 4, bei der die Abfrage des Nerr-Bits bei jedem Empfang einer Nachricht durch das nachgeschaltete Highspeed-CAN-Netz stattfindet.

7. Verfahren zur Erfassung von Störungen auf einem nachgeschalteten Highspeed-CAN-Netz zum Zweck seiner Isolierung von einem als vorrangig betrachteten vorgeschalteten Highspeed-CAN-Netz, wobei die beiden Netze durch ein Gateway (1) verbunden sind, das unter anderem einerseits ein Mikrosteuergerät (4) zur Verwaltung der Austausche und andererseits eine Leitungsschnittstelle (2) und einen CAN-Controller (3) umfasst, die dazu bestimmt sind, das Mikrosteuergerät (4) mit dem nachgeschalteten Highspeed-CAN-Netz zu verbinden,
wobei das Verfahren **dadurch gekennzeichnet ist, dass** es einen Schritt von wiederholten Sendungen von Frames durch das Mikrosteuergerät (4) zu dem nachgeschalteten Highspeed-CAN-Netz, einen Schritt des Empfangs der Bestätigungen des Empfangs dieser Frames durch die mit dem nachgeschalteten Netz verbundenen Einrichtungen bei jedem der gesendeten Frames und im Fall eines Fehlens einer Empfangsbestätigung einer dieser Einrichtungen einen Schritt der Isolierung des nachgeschalteten Highspeed-CAN-Netzes umfasst
und dass das Verfahren außerdem einen Schritt der Erzeugung eines Zählers (Non_Ack-Zähler) der Nichtempfänge eines Frames und der Inkrementierung dieses Zählers um eine vordefinierte Menge bei jeder auf die Sendung eines Frames folgenden Nichtantwort und einen Schritt des Vergleichs des Werts des Zählers mit einem Schwellenwert (Non_Ack-Schwelle) umfasst, um über die Isolierung oder Nichtisolierung des nachgeschalteten Highspeed-CAN-Netzes zu entscheiden, auf die gegebenenfalls ein Schritt der Nullstellung des Zählers folgt, wenn er diese Schwelle nach Ablauf einer gegebenen Filterzeit (Non_Ack-T-Filterung) nicht erreicht hat.
